# EUROPÄISCHE PATENTSCHRIFT

(11) **EP 1 633 798 B1**
(45) Veröffentlichungstag und Bekanntmachung des Hinweises auf die Patenterteilung: **03.01.2007**
(21) Anmeldenummer: 04735738.9
(22) Anmeldetag: 02.06.2004
(51) Int. Cl.: C08G 65/30

(54) **VERFAHREN ZUR HERSTELLUNG HOCHREINER POLYALKYLENGLYKOLE**
PRODUCTION METHOD FOR PREPARING HIGHLY PURE POLYALKYLENE GLYCOLS
PROCEDE DE PRODUCTION DE POLYALKYLENEGLYCOLS A HAUT DEGRE DE PURETE

(30) Priorität: 03.06.2003 DE 10325264; 26.08.2003 DE 10339184
(43) Veröffentlichungstag der Anmeldung: 15.03.2006
(73) Patentinhaber: BASF Aktiengesellschaft, 67056 Ludwigshafen (DE)
(72) Erfinder: KLUMPE, Markus, 68309 Mannheim (DE); BALDENIUS, Kai-Uwe, 69115 Heidelberg (DE); HACKMANN, Claus, 67281 Kirchheim a. d. Weinstrasse (DE); LAUTERBACH, Arnulf, 67067 Ludwigshafen (DE); SEELMANN-EGGEBERT, Hans-Peter, 67117 Limburgerhof (DE); ZIPPLIES, Matthias, 67056 Neustadt/Weinstrasse (DE)
(74) Vertreter: Isenbruck, Günter
(86) Internationale Anmeldenummer: PCT/EP2004/005927
(87) Internationale Veröffentlichungsnummer: WO 2004/106407

(56) Entgegenhaltungen:
- EP-A- 0 400 554
- EP-A- 1 245 608
- RO-B- 114 124
- US-A- 5 235 114

## Beschreibung

Die vorliegende Erfindung bezieht sich auf ein Verfahren zur Herstellung von Polyalkylenglykolen hoher Reinheit, insbesondere Polyethylenglykol. Erfindungsgemäß wird die hohe Reinheit durch Behandlung mit einem Bleichmittel, vorzugsweise H₂O₂-Behandlung erreicht, und es kann von Edukten technischer Reinheit ausgegangen werden. In der meist bevorzugten Ausführungsform weist das Polyethylenglykol eine Molmasse von 190 bis 210 g/mol auf und erfüllt Arzneibuchanforderungen (nachfolgend als PEG 200 benannt). Die erfindungsgemäß hergestellten Polyalkylenglykole, insbesondere das Polyethylenglykol, eignen sich für den Einsatz in Arzneimitteln und der Ernährung.

Polyoxyalkylenglykole besitzen unterschiedlichste Anwendungsgebiete. Bei manchen werden hohe Anforderungen an Reinheit und Farbzahl gestellt, etwa in solchen Produkten, die vom Menschen aufgenommen werden, wie in Nahrungsmitteln und pharmazeutischen Produkten. Das in diesen Bereichen am häufigsten eingesetzte Polyoxyalkylenglykol ist Polyethylenglykol PEG.

Beispiele für Polyoxyalkylenglykole umfassen Polyethylenglykol PEG, Polypropylenglykol PPG und Polybutylenglykol PBG, die aus Ethylenoxid EO, Propylenoxid PO beziehungsweise Butylenoxid BO hergestellt werden. Bekannt sind auch Mischpolymerisate von EO, PO und/oder BuO, beispielsweise EO mit PO. Die Mischpolymerisate können statistische Polymere oder Blockpolymere sein.

Die Anforderungen an in pharmazeutischen Produkten eingesetztes PEG sind definiert in den unterschiedlichsten Arzneibüchern, beispielsweise dem Deutschen Arzneimittelbuch DAB, der US Pharmacopeia USP und der European Pharmacopeia EUP. So muss nach der USP eine 10%ige wässrige Lösung des PEG klar und farblos sein, entsprechend EUP darf die Farbzahl maximal 20 APHA als 25%ige Lösung in Wasser betragen. Weitere Anforderungen sind ein Gehalt an Sulfatasche von maximal 0,1%, ein Gehalt an Monoethylenglykol und Diethylenglykol von zusammen maximal 0,25%, ein Gehalt an EO und 1,4-Dioxan von je maximal 10 ppm.

Bis jetzt existieren nur wenige großtechnisch einsetzbare Verfahren, die es gestatten, Polyoxyalkylenglykole hoher Reinheit aus Alkylenglykolen technischer Qualität herzustellen.

Ein Weg zur Herstellung von PEGs ist die Polymerisation von Ethylenoxid durch basische Katalysatoren, beispielsweise Hydroxiden oder Alkoholaten der Alkali- und Erdalkalimetalle. Weiterhin wird dabei ein Alkohol, generell ein bestimmtes (Poly)Ethylenglykol, als sogenannter Starter zugegeben, wobei eine Additionsreaktion des Ethylenoxids an den Starter stattfindet. Andere Polyalkylenglykole wie beispielsweise Propylenoxid lassen sich auf andere Weise durch Addition des entsprechenden Alkylenoxids an entsprechende (Poly)Alkylenglykole herstellen.

Zur großtechnischen Herstellung von Polyethylenglykolen, die den hohen Anforderungen im Nahrungsmittel- beziehungsweise Pharmabereich entsprechen, wird im Allgemeinen von Ausgangsprodukten, darunter auch Polyethylenglykolen, hoher Reinheit ausgegangen. Dies erfordert ein aufwendiges Vorreinigen der Edukte und ist somit kostenintensiv.

Die EP-A 1245 608 beschreibt die Verwendung von Triethylenglykol TEG für die Herstellung von Polyethylenglykolen. Es wird ein PEG mit niedrigem Monoethylenglykol-(MEG) und Diethylenglykol (DEG)-Gehalt erhalten, bezüglich der weiteren Anforderungen werden keine Angaben gemacht. Insbesondere wird nicht auf die Farbzahl und den EO-Gehalt der erhaltenen Produkte eingegangen. Des Weiteren geht aus den Beispielen hervor, dass zur Erlangung des niedrigen MEG- und DEG-Gehalts die Entwässerung penibel durchgeführt werden muss. So wird grundsätzlich TEG höchster Qualität mit festem KOH vermischt und die Entwässerung im Vakuum unter zusätzlichem Durchleiten von Stickstoff zur Entfernung von Restwasser durchgeführt.

RO-B 114 124 beschreibt die Reinigung von PEGs durch Behandlung mit Wasserstoffperoxid in Gegenwart eines stark sauren Ionentauschers. Dieses Verfahren hat den Nachteil, dass anschließend eine zusätzliche Behandlung am basischen Ionentauscher durchgeführt werden muss, um restliche Acidität zu entfernen.

CN-A 1 132 194 beschreibt die Herstellung von Polyoxyethylenglykolen und deren Reinigung durch Destillation.

In der RO-A 62 314 wird die Herstellung von Tetraethylenglykol aus TEG und EO unter Basenkatalyse beschrieben. Zur Reinigung muss das Produkt destilliert werden.

JP-A 53 046 907 beschreibt die katalytische Hydrierung von Polyalkylenoxiden zur Reduktion der Farbzahl in den Produkten.

RD-A 372 014 beschreibt die Entfernung farbgebender Komponenten in Tetraethylenglykol durch Hydrierung über einem Nickel-Katalysator mit nachfolgender zusätzlicher Aktivkohlereinigung.

US-A 4,946,939 beschreibt die Herstellung von Polyoxyalkylenglykolen und deren Reinigung durch Membranfiltration. Nachteilig an diesem Verfahren ist die Beschränkung auf PEGs ab Molgewicht 400 und die aufwändige Membranfiltration selbst.

Die Aufgabe der vorliegenden Erfindung besteht darin, ein Verfahren zur Herstellung von Polyoxyalkylenglykolen, vorzugsweise PEGs und besonders bevorzugt PEG200, bereitzustellen, das ausgehend von Alkylenglykolen technischer Qualität und Addition des entsprechenden Alkylenoxids die gewünschten Produkte in Qualitäten liefert, die hohen Anforderungen an Farbe und Reinheit genügen. Das Verfahren soll universell einsetzbar sein. Vorzugsweise sollen die Polyoxyalkylenglykole beziehungsweise die PEGs den Anforderungen in der Nahrungsmittel- und Pharmazeutischen Industrie genügen. Insbesondere sollen die in verschiedenen Arzneimittelbüchern vorgegebenen Anforderungen erfüllt werden, beispielsweise für PEG200 gemäß der Spezifikation nach der US Pharmacopeia USP25, die nachfolgend dargelegt wird.

| Kriterium | Gefordert nach USP 25 |
|---|---|
| Aussehen | klar und farblos |
| Farbzahl | < 20 APHA |
| kinemat. Viskosität | 3,9-4,8 mm²/s (98,9 ± 0,3°C |
| Molgewicht | OHZ über Phthalsäureanhydrid-Methode 535-590 mg/g; entspricht M 190-210 g/mol |
| pH | 4,5-7,5 |
| Sulfatasche | Max. 0,1% |
| Schwermetalle | Max. 5 ppm |
| EO / 1,4-Dioxan | je max. 10 ppm |
| MEG + DEG | in summa max. 0,25% |
| flüchtige organ. Verbindungen | erreicht die Anforderungen im Hinblick auf Benzol, Chloroform, Methylenchlorid und Trichlorethylen |

Diese Aufgabe wird gelöst durch ein Verfahren zur Reinigung von durch Addition von Alkylenoxid an Alkylenglykole erhaltene Polyalkylenglykole, dadurch gekennzeichnet, dass nach erfolgter Addition das erhaltene Polyalkylenglykol bei einem pH-Wert von > 7 mit einem Bleichmittel aus der Gruppe der Peroxide, Persäuren, Percarbonate, Perborate, Peroxodisulfate oder Sauerstoff, jeweils gegebenenfalls unter Zusatz eines Bleichaktivators, behandelt wird.

Erfindungsgemäß können bei der Additionsreaktion als sogenannte Starter die verschiedensten Alkylenglykole und Polyalkylenglykole eingesetzt werden, wobei sich deren Einsatz nach dem zu erhaltenden Polyoxyalkylenglykol richtet. Beispiele für geeignete Starter umfassen Monoethylenglykol MEG, Diethylenglykol DEG, Triethylenglykol TEG, Monopropylenglykol MPG, Dipropylenglykol DPG, Tripropylenglykol TPG, Monobutylenglykol und Dibutylenglykol.

Die Additionsreaktion wird generell in Gegenwart eines basischen Katalysators durchgeführt. Geeignete basische Katalysatoren sind dem Fachmann bekannt und sind generell ausgewählt aus Hydroxiden und Alkoholaten der Alkali- und Erdalkalimetalle. Er wird in einer Menge von 0,001 bis 5 Gew.-%, vorzugsweise 0,01 bis 1 Gew.-% und besonders bevorzugt 0,01 bis 0,02 Gew.-% zugegeben. Bevorzugte Katalysatoren sind KOH und/oder NaOH.

Die Umsetzung des Starters mit Alkylenoxid wird in der Regel so durchgeführt, dass Starter und Katalysator vor der Zugabe von Alkylenoxid vermischt, gegebenenfalls entwässert und auf die Reaktionstemperatur oberhalb 80°C gebracht werden. Dann wird das Alkylenoxid hinzugegeben.

Nach dem Ausklingen der Reaktion wird die Mischung mit dem Bleichmittel versetzt. Bevorzugt wird dies im Temperaturbereich von 50 bis 120°C, besonders bevorzugt von 70 bis 100°C durchgeführt. Nachfolgend wird abgekühlt und das Reaktionsgemisch aus dem Reaktor abgelassen.

Geeignete Bleichmittel sind dem Fachmann bekannt. Beispiele umfassen organische und anorganische Peroxide, beispielsweise H₂O₂, Persäuren, beispielsweise Peroxyessigsäure, Percarbonate, Perborate, Peroxodisulfate, weiterhin Sauerstoff. Bevorzugte Bleichmittel sind Sauerstoff oder H₂O₂. Insbesondere wird H₂O₂ eingesetzt, generell in Form der handelsüblichen wässrigen Lösungen, beispielsweise 30 %.

Die genannten Bleichmittel werden in einer Menge von 0,05 bis 1 Gew-%, vorzugsweise 0,1 bis 0,5 Gew.-%, insbesondere 0,1 bis 0,25 Gew-%, bezogen auf das Alkylenglykol, eingesetzt. Dabei ist das Bleichmittel insbesondere H₂O₂, das Alkylenglykol ist insbesondere Triethylenglykol.

Wird zusätzlich ein Bleichaktivator eingesetzt, so werden diese ausgewählt aus den üblichen Bleichaktivatoren, die dem Fachmann bekannt sind. Es kann ein einzelner Bleichaktivator oder ein Gemisch aus 2 oder mehreren eingesetzt werden. Bevorzugte Bleichaktivatoren umfassen Tetracetylethylendiamin (TAED), Pentaacetylglucose (PAG), Na-p-isononanoyl-benzol-sulfonat (i-NOBS), 1,5-Diacetyl-2,4-dioxohexahydro-1,3,5-triazin (DADHT), Tetraacetylglykouril (TAGU), N-Nonanoylsuccinimid (NOSI), Phthalsäureanhydrid, gemischte Anhydride aus Citronensäure und Essigsäure, insbesondere dreifache Essigsäureanhydride der Citronensäure, und Mn-Salze.

Gegebenenfalls wird vor der beschriebenen Umsetzung des Alkylenoxids mit dem Starter eine Entwässerung des Starters und/oder Katalysators durchgeführt. Soll ein Produkt mit einem niedrigen Restgehalt an Monoalkylenglykol und Dialkylenglykol erhalten werden, empfiehlt sich die Durchführung dieses Schritts. Insbesondere bei der Herstellung von PEG durch Addition von Ethylenoxid an TEG lässt sich durch das Entwässern ein sehr geringer Restgehalt an MEG und DEG erreichen.

Die Entwässerung kann durch dem Fachmann bekannte Maßnahmen erfolgen, beispielsweise durch Evakuieren, Durchleiten von Stickstoff, azeotropes Entwässern oder eine Kombination aus 2 oder sämtlichen der genannten Maßnahmen. Vorzugsweise wird die Entwässerung durch Evakuieren und/oder Durchleiten von Stickstoff durchgeführt. Es hat sich gezeigt, dass insbesondere bei der Herstellung von PEG nach der vorliegenden Erfindung eine Entwässerung des Starters und/oder Katalysators durch einfaches Evakuieren vollkommen ausreichend ist.

Während der Behandlung des Polyalkylenglykols mit dem Bleichmittel soll der pH-Wert der Lösung bei einem Wert von > 7 liegen, vorzugsweise 7,5 bis 10,0, insbesondere 8,0 bis 9,0. In vielen Fällen wird der pH-Wert sich von selbst auf die genannten Werte einstellen, da im Verlauf der Additionsreaktionen Carbonsäuren gebildet werden, die den pH-Wert absenken. Gegebenenfalls ist die Zugabe eines Mittels notwendig, das den pH-Wert absenkt, vorzugsweise einer Säure oder eines sauren Ionenaustauschers. Vorzugsweise wird eine Säure eingesetzt, mehr bevorzugt Essigsäure, Milchsäure und/oder Phosphorsäure, insbesondere Essigsäure und/oder Milchsäure.

Das erfindungsgemäße Verfahren eignet sich zur Herstellung und Reinigung von Polyalkylenglykolen, die durch Addition des oder der entsprechenden Alkylenoxide an einen Starter, generell unter Katalyse durch eine Base, hergestellt werden. Der eingesetzte Starter kann dabei bereits in ausreichender Reinheit vorliegen. Die erfindungsgemäßen Vorteile kommen jedoch mehr zum Tragen, wenn Starter technischer Qualität eingesetzt werden. In diesem Fall ist keine mehr oder weniger aufwendige Reinigung der Starter notwendig, und es wird trotz nicht erfolgter Vorreinigung ein Produkt hoher Reinheit und niedriger Farbzahl erhalten.

Vorzugsweise wird das erfindungsgemäße Verfahren zur Herstellung von PEG mit hoher Reinheit und niedriger Farbzahl aus Startern technischer Qualität eingesetzt. Es ist mehr bevorzugt, wenn der Starter TEG ist. Wird vor der Addition eine Entwässerung durchgeführt, so wird ein PEG erhalten, das neben einer geringen Farbzahl lediglich eine geringe Menge an MEG und DEG aufweist.

Erfindungsgemäß erhaltene PEG-Qualitäten sind für den Einsatz in Nahrungsmitteln und pharmazeutischen Produkten geeignet.

In einer bevorzugten Ausführungsform wird mit dem erfindungsgemäßen Verfahren aus Ethylenoxid mit TEG als Starter ein PEG hergestellt, das ein Molgewicht von 150 bis 500 g/mol, vorzugsweise 190 bis 300 g/mol, mehr bevorzugt 190 bis 210 g/mol und insbesondere 196 bis 203 g/mol aufweist. Innerhalb dieser Ausführungsform ist es mehr bevorzugt, wenn das PEG einen Restgehalt an MEG und DEG von zusammen < 0,25 Gew.-%, insbesondere zusammen ≤ 0,05 Gew.-% aufweist. Es ist noch mehr bevorzugt, wenn das vorstehend spezifizierte PEG einen Restgehalt an Ethylenoxid von < 10 ppm und einen Gehalt an 1,4-Dioxan von < 10 ppm, besonders bevorzugt einen Restgehalt an Ethylenoxid von < 0,5 ppm und einen Restgehalt an 1,4-Dioxan von < 2 ppm aufweist.

In der meist bevorzugten Ausführungsform wird das erfindungsgemäße Verfahren eingesetzt, um PEG aus Ethylenoxid mit TEG als Starter herzustellen, wobei das PEG ein Molgewicht von 196 bis 203 g/mol (bestimmt über OHZ nach der Phthalsäureanhydrid-Methode aus der USP25), einen Restgehalt an MEG und DEG von zusammen ≤ 0,05 Gew-%, einen Restgehalt an Ethylenoxid von < 0,5 ppm und einen Gehalt an 1,4-Dioxan von < 2 ppm, eine kinematische Viskosität zwischen 3,9 bis 4,8 mm²/s bei 98,9 ± 0,3°C aufweist, sowie eine 25 gew.-%ige wässrige Lösung des PEG200 klar und farblos ist und eine Farbzahl < 20 APHA aufweist.

Das erfindungsgemäße Verfahren erlaubt bei der Herstellung von PEG den Einsatz von Startern mit Carbonylgehalten von > 25 ppm bis an die 100 ppm.

Es lassen sich erfindungsgemäß problemlos Farbzahlen < 20 APHA erreichen, wodurch ein entsprechendes PEG die Anforderungen gemäß USP und/oder European Pharmacopeia erreicht.

Die erfindungsgemäss hergestellten Polyalkylenglykole, insbesondere das Polyethylenglykol, eignen sich für den Einsatz auf dem Gebiet der Arzneimittel, der Ernährung und der Nahrungmittelergänzung, bei Mensch und Tier.

### Beispiele

Die Molmassen der erhaltenen Produkte wurden über OHZ nach der Phthalsäureanhydrid-Methode aus der USP 25 bestimmt.

### Beispiel 1

600 g (4 mol) Triethylenglykol werden mit 0,30 g Kalilauge 40%ig (0,015 Gew.-% bezogen auf Produkt) vermischt und 30 Min. bei 80°C/< 10 mbar entwässert. Dann wird bei 150°C mit 200,6 g (4,56 mol) Ethylenoxid umgesetzt. Austrag 804 g, Farbzahl: 15 APHA (25 gew.-%ig in Wasser).

500 g des Austrags werden mit 0,064 g Essigsäure auf pH 7,4 eingestellt, mit 0,94 ml Wasserstoffperoxid 50 gew.-%ig versetzt und 1 Stunde auf 80°C erwärmt. Anschließend wird mit 35 g Wasser bei 100°C/ 15 mbar gestrippt und das Produkt abgefüllt.

| | |
|---|---|
| Aussehen: | farblos |
| Farbzahl: | 1 APHA (25 gew.-%ig in Wasser) |
| OHZ: | 564 mg/g |
| Viskosität: | 4,106 mm²/s bei 98,9°C |
| pH-Wert: | 4,5 |
| EO-Gehalt: | < 0,5 ppm |
| 1,4-Dioxan-Gehalt: | < 2 ppm |
| Summe MEG/DEG: | 0,05 Gew.-% |
| Wasser: | 0,15 Gew.-% |

### Beispiel 2

600 g (4 mol) Triethylenglykol werden mit 0,30 g Kalilauge 40%ig (0,015 Gew.-% bezogen auf Produkt) vermischt und 40 Min. bei 80°C/< 10 mbar entwässert. Dann wird bei 150°C mit 200,6 g (4,56 mol) Ethylenoxid umgesetzt. Austrag 798 g, Farbzahl: 17 APHA (25 gew.-%ig in Wasser).

500 g des Austrags werden mit 0,06 g Essigsäure auf pH 8,1 eingestellt, mit 0,94 ml Wasserstoffperoxid 50 gew.-%ig versetzt und 1 Stunde auf 80°C erwärmt. Anschließend wird mit 35 g Wasser bei 100°C/ 15 mbar gestrippt und das Produkt abgefüllt.

| | |
|---|---|
| Aussehen: | farblos |
| Farbzahl: | 5 APHA (25 gew.-%ig in Wasser) |
| OHZ: | 564 mg/g |
| Viskosität: | 4,126 mm²/s bei 98,9°C |
| pH-Wert: | 5,4 |
| EO-Gehalt: | < 0,5 ppm |
| 1,4-Dioxan-Gehalt: | < 2 ppm |
| Summe MEG/DEG: | < 0,05 Gew.-% |
| Wasser: | 0,15 Gew.-% |

### Beispiel 3

600 g (4 mol) Triethylenglykol werden mit 0,30 g Kalilauge 40%ig (0,015 Gew.-% bezogen auf Produkt) vermischt und 30 Min. bei 80°C/< 10 mbar entwässert. Dann wird bei 150°C mit 200,6 g (4,56 mol) Ethylenoxid umgesetzt. Austrag 803 g, Farbzahl: 13 APHA (25 gew.-%ig in Wasser).

500 g des Austrags werden mit 0,065 g Essigsäure auf pH 8,4 eingestellt, mit 0,94 ml Wasserstoffperoxid 50 gew.-%ig versetzt und 1 Stunde auf 80°C erwärmt. Anschließend wird mit 35 g Wasser bei 100°C/ 15 mbar gestrippt und das Produkt abgefüllt.

| | |
|---|---|
| Aussehen: | farblos |
| Farbzahl: | 3 APHA (25 gew.-%ig in Wasser) |
| OHZ: | 564 mg/g |
| Viskosität: | 4,107 mm²/s bei 98,9°C |
| pH-Wert: | 4,7 |
| EO-Gehalt: | < 0,5 ppm |
| 1,4-Dioxan-Gehalt: | < 2 ppm |
| Summe MEG/DEG: | 0,05 Gew.-% |
| Wasser: | 0,15 Gew.-% |

### Beispiel 4

600 g (4 mol) Triethylenglykol werden mit 0,30 g Kalilauge 40%ig (0,015 Gew.-% bezogen auf Produkt) vermischt und 45 Min. bei 80°C/< 10 mbar entwässert. Dann wird bei 150°C mit 200,6 g (4,56 mol) Ethylenoxid umgesetzt. Austrag 797 g, Farbzahl: 65 APHA (25 gew.-%ig in Wasser).

300 g des Austrags werden mit 0,02 g Essigsäure und 0,56 ml Wasserstoffperoxid 50 gew.-%ig versetzt 1 Stunde auf 80°C erwärmt. Anschließend wird mit 21 g Wasser bei 100°C/ 15 mbar gestrippt und das Produkt abgefüllt.

| | |
|---|---|
| Aussehen: | farblos |
| Farbzahl: | 17 APHA (25 gew.-%ig in Wasser) |
| pH-Wert: | 5,4 |

### Beispiel 5

600 g (4 mol) Triethylenglykol werden mit 0,30 g Kalilauge 40%ig (0,015 Gew.-% bezogen auf Produkt) vermischt und 45 Min. bei 80°C/< 10 mbar entwässert. Dann wird bei 150°C mit 200,6 g (4,56 mol) Ethylenoxid umgesetzt. Austrag 799 g, Farbzahl: 21 APHA (25 gew.-%ig in Wasser).

600 g des Austrags werden mit 0,04 g Essigsäure auf pH 9,5 eingestellt. 300 g davon werden mit 0,564 ml Wasserstoffperoxid 50 gew.-%ig versetzt und 1 Stunde auf 80°C erwärmt. Anschließend wird mit 21 g Wasser bei 100°C/ 15 mbar gestrippt und das Produkt abgefüllt.

| | |
|---|---|
| Aussehen: | farblos |
| Farbzahl: | 10 APHA (25 gew.-%ig in Wasser) |
| pH-Wert: | 5,2 |

Die anderen 300 g werden mit 0,28 ml Wasserstoffperoxid 50 gew.-%ig versetzt und 1 Stunde auf 80°C erwärmt. Anschließend wird mit 21 g Wasser bei 100°C / 15 mbar gestrippt und das Produkt abgefüllt.

| | |
|---|---|
| Aussehen: | farblos |
| Farbzahl: | 15 APHA (25 gew.-%ig in Wasser) |
| pH-Wert: | 6,1 |

### Beispiel 6

79 kg (53 mol) Triethylenglykol werden mit 35 g Kalilauge 45%ig vermischt und bei 120°C / < 20 mbar 25 Min. lang entwässert. Dann wird bei 150°C mit 26,5 kg (60 mol) Ethylenoxid umgesetzt. Der Ansatz wird mit 7 g Essigsäure auf pH 9,2 eingestellt, mit 199 g Wasserstoffperoxid 50 gew.-%ig versetzt und 1 Stunde bei 80°C gerührt. anschließend wird mit 7,35 kg Wasser bei 100°C / < 20 mbar gestrippt und das Produkt abgefüllt.

| | |
|---|---|
| Aussehen: | farblos |
| Farbzahl: | 5 APHA (25 gew.-%ig in Wasser) |
| OHZ: | 557,6 mg/g |
| Viskosität: | 4,455 mm²/s bei 98,9°C |
| pH-Wert: | 5,3 |
| EO-Gehalt: | < 0,5 ppm |
| 1,4-Dioxan-Gehalt: | < 2 ppm |
| Summe MEG/DEG: | 0,1 Gew.-% |
| Wasser: | 0,13 Gew.-% |

### Beispiel 7

79 kg (53 mol) Triethylenglykol werden mit 35 g Kalilauge 45%ig vermischt und bei 120°C / < 20 mbar 25 Min. lang entwässert. Dann wird bei 150°C mit 26,5 kg (60 mol) Ethylenoxid umgesetzt. Der Ansatz wird mit 13 g Essigsäure auf pH 7,2 eingestellt (Farbzahl einer Probe: 53 APHA; 25 gew.-%ig in Wasser. Nachfolgend wird mit 9 g Kaliumhydroxid auf pH 8,6 eingestellt, mit 99 g Wasserstoffperoxid 50 gew.-%ig versetzt und 1 Stunde bei 80°C gerührt. anschließend wird mit 7,35 kg Wasser bei 100°C / < 20 mbar gestrippt und das Produkt abgefüllt.

| | |
|---|---|
| Aussehen: | farblos |
| Farbzahl: | 5 APHA (25 gew.-%ig in Wasser) |
| OHZ: | 560 mg/g |
| Viskosität: | 4,486 mm²/s bei 98,9°C |
| pH-Wert: | 6,3 |
| EO-Gehalt: | < 0,5 ppm |
| 1,4-Dioxan-Gehalt: | < 2 ppm |
| Summe MEG/DEG: | 0,05 Gew.-% |
| Wasser: | 0,20 Gew.-% |

## Patentansprüche

1. Verfahren zur Reinigung von durch Addition von Alkylenoxid an Alkylenglykol erhaltene Polyalkylenglykole, **dadurch gekennzeichnet, dass** nach erfolgter Addition das erhaltene Polyalkylenglykol bei einem pH-Wert von > 7 mit einem Bleichmittel aus der Gruppe der organischen und anorganischen Peroxide, Persäuren, Percarbonate, Perborate, Peroxidsulfate oder Sauerstoff, jeweils gegebenenfalls unter Zusatz eines Bleichaktivators, behandelt wird.

2. Verfahren nach Anspruch 1, **dadurch gekennzeichnet, dass** die Behandlung mit dem Bleichmittel bei einer Temperatur von 50 bis 120°C durchgeführt wird.

3. Verfahren nach Anspruch 1 oder 2, **dadurch gekennzeichnet, dass** als Bleichmittel H₂O₂ eingesetzt wird.

4. Verfahren nach einem der Ansprüche 1 bis 3, **dadurch gekennzeichnet, dass** die Behandlung mit dem Bleichmittel bei einem pH-Wert von 7,5 bis 10,0, vorzugsweise 8,0 bis 9,0, durchgeführt wird.

5. Verfahren nach einem der Ansprüche 1 bis 4, **dadurch gekennzeichnet, dass** die pH-Wert-Einstellung durch Zugabe einer Säure oder eines Ionenaustauschers geschieht.

6. Verfahren nach einem der Ansprüche 1 bis 5, **dadurch gekennzeichnet, dass** die Addition des Alkylenoxids an das Alkylenglykol in Gegenwart eines basischen Katalysators aus der Gruppe der Hydroxide und Alkoholate der Alkali- und Erdalkalimetalle durchgeführt wird.

7. Verfahren nach einem der Ansprüche 1 bis 6, **dadurch gekennzeichnet, dass** das erhaltene Polyalkylenglykol Polyethylenglykol ist.

8. Verfahren nach Anspruch 7, **dadurch gekennzeichnet, dass** das bei der Addition verwendete Alkylenglykol Triethylenglykol ist.

9. Verfahren nach Anspruch 8, **dadurch gekennzeichnet, dass** das Triethylenglykol vor der Additionsreaktion entwässert wird.

10. Verfahren nach einem der Ansprüche 7 bis 9, **dadurch gekennzeichnet, dass** das derart erhaltene Polyethylenglykol ein Molgewicht von 150 bis 500 g/mol aufweist, vorzugsweise ein Molgewicht von 196 bis 203 g/mol.s.

11. Verfahren nach einem der Ansprüche 1 bis 10, **dadurch gekennzeichnet, dass** das Bleichmittel in einer Menge von 0,05 bis 1 Gew-%, bezogen auf das Alkylenglykol, eingesetzt wird.

## Claims

1. A process for purifying polyalkylene glycols obtained by adding alkylene oxide to alkylene glycol which comprises, after addition is complete, treating the resultant polyalkylene glycol at a pH of > 7 with a bleaching agent selected from the group consisting of organic and inorganic peroxides, peracids, percarbonates, perborates, peroxodisulfates or oxygen, in each case with or without the addition of a bleaching activator.

2. The process according to claim 1, wherein the treatment with the bleaching agent is carried out at a temperature from 50 to 120°C.

3. The process according to claim 1 or 2, wherein H₂O₂ is used as bleaching agent.

4. The process according to one of claims 1 to 3, wherein the treatment with the bleaching agent is carried out at a pH from 7.5 to 10.0, preferably from 8.0 to 9.0.

5. The process according to one of claims 1 to 4, wherein the pH is set by adding an acid or an ion exchanger.

6. The process according to one of claims 1 to 5, wherein the addition of the alkylene oxide to the alkylene glycol is carried out in the presence of a base catalyst selected from the group of hydroxides and alkoxides of alkali metals and alkaline earth metals.

7. The process according to one of claims 1 to 6, wherein the resultant polyalkylene glycol is polyethylene glycol.

8. The process according to claim 7, wherein the alkylene glycol used in the addition is triethylene glycol.

9. The process according to claim 8, wherein the triethylene glycol is dried before the addition reaction.

10. The process according to one of claims 7 to 9, wherein the polyethylene glycol obtained in this manner has a molar weight of from 150 to 500 g/mol, preferably a molar weight from 196 to 203 g/mol.

11. The process according to one of claims 1 to 10, wherein the bleaching agent is used in an amount of from 0.05 to 1% by weight, based on the alkylene glycol.

## Revendications

1. Procédé de purification de polyalkylèneglycols obtenus par addition d'oxyde d'alkylène sur un alkylèneglycol, **caractérisé en ce qu'**après l'addition complète, le polyalkylèneglycol obtenu est traité à un pH > 7 avec un agent de blanchiment du groupe des peroxydes organiques et inorganiques, peracides, percarbonates, perborates, sulfates peroxydiques ou oxygène, chaque fois sous éventuelle addition d'un activateur de blanchiment.

2. Procédé selon la revendication 1, **caractérisé en ce que** le traitement avec l'agent de blanchiment se fait à une température de 50 à 120°C.

3. Procédé selon la revendication 1 ou 2, **caractérisé en ce qu'**on utilise comme agent de blanchiment du H₂O₂.

4. Procédé selon l'une des revendications 1 à 3, **caractérisé en ce que** le traitement avec l'agent de blanchiment se fait à un pH situé entre 7,5 et 10,0, de préférence entre 8,0 et 9,0.

5. Procédé selon l'une des revendications 1 à 4, **caractérisé en ce que** le réglage du pH se produit par addition d'un acide ou d'un échangeur d'ions.

6. Procédé selon l'une des revendications 1 à 5, **caractérisé en ce que** l'addition de l'oxyde d'alkylène sur l'alkylèneglycol se fait en présence d'un catalyseur basique du groupe des hydroxydes et alcoolates des métaux alcalins et alcalino-terreux.

7. Procédé selon l'une des revendications 1 à 6, **caractérisé en ce que** le polyalkylèneglycol obtenu est un polyéthylèneglycol.

8. Procédé selon la revendication 7, **caractérisé en ce que** l'alkylèneglycol utilisé lors de l'addition est un triéthylèneglycol.

9. Procédé selon la revendication 8, **caractérisé en ce que** le triéthylèneglycol est déshydraté avant la réaction d'addition.

10. Procédé selon l'une des revendications 7 à 9, **caractérisé en ce que** le polyéthylèneglycol obtenu de cette manière présente un poids molaire entre 150 et 500 g/mole, de préférence un poids molaire de 196 à 203 g/mole.

11. Procédé selon l'une des revendications 1 à 10, **caractérisé en ce que** l'agent de blanchiment est utilisé dans une quantité de 0,05 à 1% en poids, sur base de l'alkylèneglycol.
